# EUROPÄISCHE PATENTSCHRIFT

(11) **EP 0 888 606 B1**
(45) Veröffentlichungstag und Bekanntmachung des Hinweises auf die Patenterteilung: **21.11.2001**
(21) Anmeldenummer: 97902311.6
(22) Anmeldetag: 04.02.1997
(51) Int. Cl.: G10K 11/172

(54) **MEHRSCHICHTIGES SCHALLABSORBIERENDES BAUTEIL**
MULTI-LAYER SOUND-ABSORBING COMPONENT
ELEMENT MULTICOUCHE ABSORBANT LE SON

(30) Priorität: 15.04.1996 DE 29606817 U
(43) Veröffentlichungstag der Anmeldung: 07.01.1999
(73) Patentinhaber: FAIST Automotive GmbH & Co. KG, 86381 Krumbach (DE)
(72) Erfinder: PFAFFELHUBER, Klaus, D-89312 Günzburg (DE); KÖCK, Gerhard, D-86480 Waltenhausen (DE); LAHNER, Stefan, D-86381 Krumbach (DE)
(74) Vertreter: Müller, Hans-Jürgen, Dipl.-Ing.
(86) Internationale Anmeldenummer: EP9700486
(87) Internationale Veröffentlichungsnummer: WO9739439

(56) Entgegenhaltungen:
- EP-A- 0 185 839
- EP-A- 0 536 078
- EP-A- 0 677 429
- DE-U- 9 408 118
- US-A- 4 441 578

## Beschreibung

Die Erfindung betrifft ein mehrschichtiges schallabsorbierendes Bauteil.

Derartige Bauteile sind bereits bekannt (DE-PS 43 34 984, EP 0 214 559 A3). Dabei wird zwischen der Trägerschicht, die beispielsweise aus Blech gebogen ist, und den beiden benachbarten Schichten eine große Anzahl von Hohlräumen gebildet, welche zusammen mit Nachbarschichten ein schwingfähiges Mehrkammer-System beim Auftreffen von Schallwellen ergeben, das als "Masse-Feder-System" bezeichnet wird. Bei einer Ausbildung dieses Bauteils besteht die der Trägerschicht zugewandte Schicht aus Polypropylenschaum, der in speziellen Formgebungsverfahren eine Anzahl von napfartigen Vertiefungen und Ausbuchtungen erhalten hat. An der der Trägerschicht abgewandten Seite ist die Schaumstoffschicht mit einer Polypropylenfolie oder einem Vlies eines Flächengewichts von höchstens 80 g/m² so überzogen, daß diese Folie bzw. dieses Vlies den gesamten Konturen der Schaumstoffschicht folgt. Bei einer anderen Ausbildung eines solchen vorbekannten Bauteils ist die der Trägerschicht zugewandte Schicht mit einem hohen Flächengewicht von etwa 6 kg/m² ausgebildet. An der der Trägerschicht abgewandten Oberfläche ist diese Schwerschicht mit einem Teppich überzogen, der beispielsweise den "Fußboden" eines Kfz-Fahrgastraumes bildet. Die Schwerschicht wird von der Trägerschicht durch Schaumstoff im Abstand gehalten, welcher eine Vielzahl von Hohlkammern bildet, die ihrerseits jeweils von einer Folie eines Flächengewichts zwischen 25 und 150 g/m² umhüllt und mit Luft gefüllt sind.

Die Herstellungskosten derartiger Bauteile sind verhältnismäßig hoch.

Mehrschichtiges Schallabsorptionskörper sind auch aus EP-A-0 185 839 bekannt.

Der Erfindung liegt die Aufgabe zugrunde, Bauteil wie oben beschrieben dahingehend zu verbessern, daß trotz niedriger Herstellungskosten eine gute Schallabsorption erreichbar ist und sich Möglichkeiten bieten, auf einfache Weise auch das Frequenzgebiet der Schallabsorption zu beeinflussen.

Die Erfindung ist im Anspruch 1 gekennzeichnet und in Unteransprüchen sind vorteilhafte Ausbildungen beansprucht.

Es empfiehlt sich, die eigensteife Schicht mit der Absorberschicht als zweckmäßigerweise ebene Membranen ausgebilden, sodaß Art "Doppelmembran" entsteht.

Die Absorberschicht sollte gegenüber der eigensteifen Schicht, an der sie anliegt, schwingfähig bleiben. Es empfiehlt sich, wenn die Absorberschicht porös ausgebildet ist. Hierzu kann sie aus einem Vlies aus Schaumstoff und/oder aus Gewebe bestehen. Auch ist es für manche Anwendungszwecke günstig, wenn die Absorberschicht Kanäle aufweist, welche sich quer durch die Absorberschicht von einer Oberfläche zur anderen Oberfläche hindurchziehen. Auch die eigensteife Schicht kann aus solchen Materialien bestehen. Vielfach empfiehlt es sich, die Absorberschicht und/oder die eigensteife Schicht aus Folien herzustellen.

Durch Änderung des Abstands zwischen der Trägerschicht und einem solchen Membransystem läßt sich die tiefe Resonanzfrequenz des achwingfähigen Masse-Feder-System steuern, so daß spezielle Absorptionsspektren realisiert werden können.

Die Herstellung des erfindungsgemäßen Bauteils ist insb. dadurch sehr vereinfacht, daß das "Doppelmembransystem" bestehend aus der eigensteifen Schicht und der Absorberschicht über die den Anwenderwünschen entsprechend geformte Trägerschicht so gelegt wird, daß der Rand des Doppelmembransystems mit dem Rand der Trägerschicht verbunden wird, während sich ein einziger Hohlraum innerhalb des vom Rand umschriebenen Bereichs zwischen dem Doppelmembransystem und der Trägerschicht bildet. In manchen Fällen kann es insb. zur Steuerung des Absorptionsspektrum zweckmäßig sein, daß Schichtenpaar aus eigensteifer Schicht und Absorberschicht an bestimmten Stellen etwas aus der Ebene ihrer Erstreckung herauszuverformen.

Die als Deckschicht wirkende Absorberschicht ist zweckmäßigerweise so ausgebildet, daß sie nicht nur akustisch wirksam ist, sondern auch schmutzabweisend wirkt.

Weitere Schichten sind ebenfalls anwendbar.

Im übrigen ist es auch möglich, in den Hohlraum zusätzlich poröses Absorbermaterial einzubringen, wodurch sich das Frequenzverhalten der Absorberwirkung verändern läßt.

Besonders vorteilhaft ist die Erfindung anwendbar bei Kombination mit der Motorkapsel von Kraftfahrzeugen; dabei wird die Trägerschale als Trägerschicht verwendet, d.h., daß das Doppelmembransystem einfach auf den Rand der Trägerschale der Motorkapsel befestigt wird.

Ausführungsbeispiele der Erfindung werden nun anhand der Zeichnung beschrieben. Dabei zeigen:
- Figur 1: schematisch den Querschnitt durch ein erfindungsgemäßes Bauelement;
- Figur 2: einen Teilquerschnitt durch eine abgewandelte Ausbildungsform und
- Figur 3: einen Teilausschnitt aus einem "Doppelmembransystem".

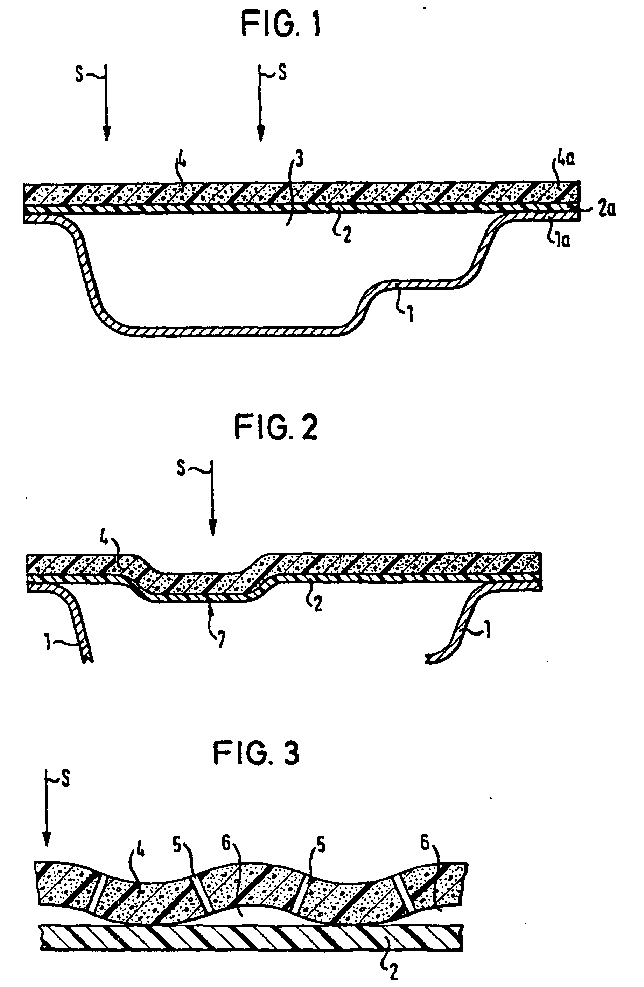

Gemäß Figur 1 ist die Trägerschale einer Motorkapsel wannenartig ausgebildet; sie dient als Trägerschicht 1, deren Rand 1a sich in einer bestimmten Ebene befindet. An den Rand 1a der Trägerschicht 1 ist das Doppelmembransystem dauerhaft so befestigt, daß ein einziger Hohlraum 3, zwischen der Trägerschicht 1 und dem Doppelmembransystem gebildet ist. Das Doppelmembransystem weist einerseits eine verhältnismäßig, eigensteife Schicht 2 auf, welche als Membran in der Ebene des Rands 1a der Trägerschicht 1 aufgespannt ist. Dabei ist der Rand 2a der Schicht 2 mit dem Rand 1a der Trägerschicht 1 verbunden. Unmittelbar auf die eigensteife Schicht 2 ist die Absorberschicht 4 aufgelegt und deren Rand 4a mit dem Rand 2a der Schicht 2 verbunden. Im Bereich zwischen den Rändern 2a, 4a ist die Absorberschicht 4 jedoch nicht mit der eigensteifen Schicht 2 verbunden, obwohl beide Schichten aneinander anliegen. Der Schall fällt in Schalleinfallsrichtung S gemäß den Pfeilen auf das Bauelement auf.

Die eigensteife Schicht 2 ist bei diesem Beispiel etwa 0,5 - 5 mm dick; sie besteht aus Polypropylen und hat ein Flächengewicht von 100 - 3000 g/m².

Die Absorberschicht 4 aus Polypropylenschaum ist demgegenüber 5 - 10 mm dick; sie hat ein Flächengewicht von 50 - 2000 g/m².

Bei der abgewandelten Ausbildungsform von Figur 2 ist das Doppelmembransystem der eigensteifen Schicht 2 und der Absorberschicht 4 im Bereich 7 etwas nach innen zum Hohlraum 3 eingebogen. Hierdurch wird das Frequenzspektrum der Schallabsorption des Masse-Feder-Systems gebildet aus der eigensteifen Schicht 2, dem Hohlraum 3 und teilweise auch der Trägerschicht 1 verändert, und zwar nach etwas höheren Frequenzen verschoben.

In Figur 3 ist schematisch dargestellt, wie sich die Absorberschicht 4 beim Einfall von Schallwellen in Schallwelleneinfallsrichtung S in Bezug zur demgegenüber eigensteiferen Schicht 2 schwingfähig verhält. Obwohl beide Ränder 2a, 4a dieser Schicht miteinander verbunden sind, ist die Absorberschicht 4 in der Lage, in den Bereichen zwischen den Rändern 2a, 4a zu schwingen, wie dies hier vergrößert veranschaulicht ist. Die "Wellentäler" der Absorberschicht 4 stützen sich auf der im wesntlichen plan bleibenden eigenateifen Schicht 2 auf, während sich die Wellenberge von der eigensteifen Schicht 2 abheben und dazwischen Hohlräume 6 bilden, wodurch zusätzliche Absorptionseffekte erzielt werden, die über die Absorberwirkung der Absorberschicht 4 und über die Wirkung des Masse-Feder-Systems zwischen der eigensteifen Schicht 2 und dem Hohlraum 3 hinausgehen. Bei diesem Beispiel sind dünne Kanäle 5 in der Absorberschicht 4 ausgebildet, welche die Hohlräume 6 nach außen gewissermaßen "entlüften". Durch die Länge und Anzahl der Kanäle 5 sind zusätzliche Möglichkeiten das Frequenzverhalten der Schallabsorption zu beeinflussen.

Die Schallabsorption durch die Absorberschicht 4 erfolgt bei verhältnismäßig hohen Frequenzen im Bereich von f = 2 - 10 KHz, während die Schallabsorption des Masse-Feder-Systems der eigensteifen Schicht 2 des Hohlraums 3 und der Trägerschicht bei tieferen Frequenzen im Bereich von f = 0,1 - 5 KHz stattfindet.

Diese Angaben dürften genügen, um deutlich zu machen, daß trotz einfachem Aufbau und daher auch niedriger Herstellungskosten ein Bauelement mit guten schallabsorbierenden Eigenschaften realisierbar ist, und zwar mit der zusätzlichen Möglichkeit, den Absorptionspegel zu beeinflussen und nach bestimmten Frequenzen zu optimieren.

## Patentansprüche

1. Mehrschichtiges schallabsorbierendes Bauteil mit einer eigensteifen Trägerschicht (1) und mit zwei benachbarten Schichten, welche mit Ihrem Rand (2a, 4a) mit der Trägerschicht (1) verbunden sind und mit der Trägerschicht einen großvolumigen Hohlraum (3) bilden, bei dem die der Trägerschicht (1) zugewandte Schicht eigensteif ist, wobei die der Trägerschicht (1) zugewandte Schicht als Membranschicht (2) und die der Trägerschicht (1) abgewandte Schicht als Absorberschicht (4) ausgebildet sind, und wobei diese Schichten und der Hohlraum (3) derart bemessen und ausgebildet sind, daß die Membranschicht (2) mit dem im Hohlraum (3) befindlichen und nach außerhalb des Bauteils abgeschlossenen Gasvolumen ein schwingförmiges Masse-Feder-System zum Absorbieren von Frequenzen im Bereich von vornehmlich 0,1 - 5 kHz bildet und daß die Absorberschicht (4) demgegenüber höhere Frequenzen im Bereich von vornehmlich 2 - 10 kHz absorbiert.

2. Bauteil nach Anspruch 1,
**dadurch gekennzeichnet,**
**daß** auch die Absorberschicht (4) als Membranschicht ausgebildet sind.

3. Bauteil nach Anspruch 1 oder 2,
**dadurch gekennzeichnet, daß** die Absorberschicht (4) an der Membranschicht (2) anliegt, aber in Bezug zu dieser schwingfähig ist.

4. Bauteil nach einem der vorhergehenden Ansprüche,
**dadurch gekennzeichnet,**
**daß** die Absorberschicht (4) porös ausgebildet ist.

5. Bauteil nach einem der vorhergehenden Ansprüche,
**dadurch gekennzeichnet,**
**daß** die Absorberschicht (4) Kanäle (5) aufweist, welche sich durch deren gesamte Schichtdicke erstrecken.

6. Bauteil nach einem der vorhergehenden Ansprüche,
**dadurch gekennzeichnet,**
**daß** die Absorberschicht (4) aus einem Vlies besteht.

7. Bauteil nach einem der Ansprüche 1 - 5,
**dadurch gekennzeichnet,**
**daß** die Absorberschicht (4) aus Schaumstoff besteht.

8. Bauteil nach einem der Ansprüche 1 - 5,
**dadurch gekennzeichnet,**
**daß** die Absorberschicht (4) und/oder die Membranschicht (2) ein Gewebe aufweist.

9. Bauteil nach einem der vorhergehenden Ansprüche,
**dadurch gekennzeichnet,**
**daß** im Hohlraum (5) zwischen der Trägerschicht (1) und der Membranschicht (2) poröses Absorbermaterial angeordnet ist.

10. Bauteil nach einem der vorhergehenden Ansprüche,
**dadurch gekennzeichnet,**
**daß** zwischen der Trägerschicht (1) und der Membranschicht (2) ein einziger Hohlraum (3) gebildet und die Membranschicht (2) im wesentlichen eben ausgebildet ist.

11. Verwendung des Bauteils nach einem der vorhergehenden Ansprüche für die Trägerschale einer Motorkapsel von insb. Kraftfahrzeugen mit der Maßgabe, daß die Trägerschicht (1) die Trägerschale bildet und die Absorberschicht (4) der Schallquelle zugewandt ist.

## Claims

1. Multi-layer sound-absorbing component comprising an inherently rigid substrate (1) and two adjacent layers connected to said substrate (1) by their edges (2a, 4a) and co-operate with said substrate to form a large-volume cavity (3), with the layer facing said substrate (1) being inherently rigid, wherein said layer facing said substrate (1) is configured as membrane layer (2) while the layer turned away from said substrate (1) is configured as absorbing layer (4), and wherein said layers and said cavity (3) are so dimensioned and configured that said membrane layer (2) together with the gas volume contained in said cavity (3) and enclosed from the outside of the component constitutes a mass-spring system capable of oscillating for the absorption of frequencies in the range of mainly 0.1 to 5 kHz, and that said absorbing layer (4), by contrast, absorbs higher frequencies in the range of mainly 2 to 10 kHz.

2. Component according to Claim 1,
**characterised in**
**that** said absorbing layer (4), too, is configured as membrane layer.

3. Component according to Claim 1 or 2,
**characterised in**
**that** said absorbing layer (4) bears against said membrane layer (2) but is capable of oscillating relative to the latter.

4. Component according to any of the preceding Claims,
**characterised in**
**that** said absorbing layer (4) has a porous configuration.

5. Component according to any of the preceding Claims,
**characterised in**
**that** said absorbing layer (4) comprises passages (5) extending through its entire thickness of layer.

6. Component according to any of the preceding Claims,
**characterised in**
**that** said absorbing layer (4) consists of a non-woven material.

7. Component according to any of the Claims 1 to 5,
**characterised in**
**that** said absorbing layer (4) consists of a foamed material.

8. Component according to any of the Claims 1 to 5,
**characterised in**
**that** said absorbing layer (4) and/or said membrane layer (2) comprises a tissue.

9. Component according to any of the preceding Claims,
**characterised in**
**that** a porous absorbing material is disposed in said cavity (5) between said substrate (1) and said membrane layer (2).

10. Component according to any of the preceding Claims,
**characterised in**
**that** a single cavity (3) is formed between said substrate (1) and said membrane layer (2) and that said membrane layer (2) has a substantially flat configuration.

11. Application of the component according to any of the preceding Claims for the carrier shell of an engine enclosure of motor vehicles, in particular, with the provision that said substrate (1) constitutes the carrier shell and that said absorbing layer (4) faces the source of sound.

## Revendications

1. Composant multicouche à absorption acoustique, comprenant un substrat à rigidité propre (1) et deux couches adjacentes reliées audit substrat (1) par leurs bords (2a, 4a), qui coopèrent avec ledit substrat à former une cavité (3) à grand volume, la couche en face dudit substrat (1) présentant une rigidité propre, dans lequel
ladite couche en face dudit substrat (1) est configurée en tant que couche à membrane (2), pendant que la couche opposée audit substrat (1) est configurée en tant que couche insonorisante (4), et dans lequel lesdites couches et ladite cavité (3) sont dimensionnées et configurées de façon, que ladite couche à membrane (2), ensemble avec le volume de gaz contenu dans ladite cavité (3) et renfermé à isolation de l'extérieur du composant, constitue un système masse-ressort capable d'osciller pour l'absorption des fréquences dans la gamme de surtout 0.1 à 5 kHz, et que ladite couche insonorisante (4), par contre, absorbe des plus hautes fréquences dans la gamme de surtout 2 à 10 kHz.

2. Composant selon la revendication 1,
**caractérisé en ce**
**que** ladite couche insonorisante (4) est également configurée sous forme d'une couche à membrane.

3. Composant selon la revendication 1 ou 2,
**caractérisé en ce**
**que** ladite couche insonorisante (4) porte contre ladite couche à membrane (2), mais est capable d'osciller relativement à la dernière.

4. Composant selon une quelconque des revendications précédentes,
**caractérisé en ce**
**que** ladite couche insonorisante (4) présente une configuration poreuse.

5. Composant selon une quelconque des revendications précédentes,
**caractérisé en ce**
**que** ladite couche insonorisante (4) comprend des passages (5), qui s'étendent à travers l'épaisseur de toute la couche.

6. Composant selon une quelconque des revendications précédentes,
**caractérisé en ce**
**que** ladite couche insonorisante (4) est composée d'un matériau non-tissé.

7. Composant selon une quelconque des revendications 1 à 5,
**caractérisé en ce**
**que** ladite couche insonorisante (4) est fait d'un matériau alvéolaire.

8. Composant selon une quelconque des revendications 1 à 5,
**caractérisé en ce**
**que** ladite couche insonorisante (4) et/ou ladite couche à membrane (2) comprend un tissu.

9. Composant selon une quelconque des revendications précédentes,
**caractérisé en ce**
**qu'**un matériau absorbant poreux est disposé dans ladite cavité (5) entre ledit substrat (1) et ladite couche à membrane (2).

10. Composant selon une quelconque des revendications précédentes,
**caractérisé en ce**
**qu**'une seule cavité (3) est formée entre ledit substrat (1) et ladite couche à membrane (2), et en ce que ladite couche à membrane (2) présente une configuration essentiellement plate.

11. Application du composant selon une quelconque des revendications précédentes pour la coque-porteur d'une boîte de moteur des véhicules automobiles, en particulier, à la condition que ledit substrat (1) constitue la coque-porteur et que ladite couche insonorisante (4) se trouve en face de la sourde de son.
